(19) Europäisches Patentamt
European Patent Office
Office européen des brevets

(11) **EP 1 915 812 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(21) Anmeldenummer: **06764081.3**

(22) Anmeldetag: **06.07.2006**

(51) Int Cl.:
*H02K 15/04* *(2006.01)*    *H02K 3/12* *(2006.01)*

(86) Internationale Anmeldenummer:
**PCT/EP2006/063928**

(87) Internationale Veröffentlichungsnummer:
**WO 2007/017322 (15.02.2007 Gazette 2007/07)**

(54) **ELEKTRISCHE MASCHINE MIT MEHRETAGIGER WICKLUNG**

ELECTRIC MACHINE WITH A MULTI-LEVEL WINDING

MACHINE ELECTRIQUE A ENROULEMENT MULTIETAGE

(84) Benannte Vertragsstaaten:
**DE FR IT**

(30) Priorität: **09.08.2005 DE 102005037463**

(43) Veröffentlichungstag der Anmeldung:
**30.04.2008 Patentblatt 2008/18**

(73) Patentinhaber: **ROBERT BOSCH GMBH**
**70442 Stuttgart (DE)**

(72) Erfinder: **WOLF, Gert**
**71563 Affalterbach (DE)**

(56) Entgegenhaltungen:
EP-A- 1 122 861    EP-A- 1 179 880
EP-A- 1 381 140    EP-A- 1 416 610
DE-A1- 10 208 566    US-A1- 2002 043 886

• **PATENT ABSTRACTS OF JAPAN Bd. 011, Nr. 088 (E-490), 18. März 1987 (1987-03-18) -& JP 61 240832 A (HITACHI LTD), 27. Oktober 1986 (1986-10-27)**

**Beschreibung**

Die Erfindung betrifft ein Verfahren zur Herstellung einer Ständerwicklung einer elektrischen Maschine.

Stand der Technik

Elektrische Maschinen gemäß dem Oberbegriff des Anspruchs 1 sind aus dem Stand der Technik bekannt. Sie werden dabei als elektrische Motoren, elektrische Generatoren oder bei wechselnden Betriebszuständen eine Zeit lang als elektrischer Motor und eine Zeit lang als elektrischer Generator betrieben. Von großem Interesse ist dabei insbesondere der Einsatz einer elektrischen Maschine als Generator in einem Kraftfahrzeug. Aufgrund der steigenden Leistungsanforderungen innerhalb eines Kraftfahrzeugs sowie dem geringen Bauraum, der zur Verfügung steht, ist es ein stetes Bestreben elektrische Maschinen zu entwickeln, die effizient arbeiten, kompakt gebaut sind und eine hohe Lebenserwartung aufweisen.

Aus der Offenlegungsschrift DE 102 08 566 A1 ist bereits ein Herstellungsverfahren bekannt, bei welchen zwei Spulenteile auf einem Wickelbalken nacheinander aus einem ununterbrochenen Draht gewickelt werden, sodass ein Umkehrpunkt entsteht.

Die Erfindung ist ein Verfahren wie in Anspruch 1 definiert. Vorteilhafte Ausgestaltungsformen der Erfindung sind in den abhängigen Ansprüchen 2 - 17 definiert.

Vorteile der Erfindung

Bei dem Verfahren zur Herstellung einer Ständerwicklung für eine elektrische Maschine, insbesondere für einen Generator eines Kraftfahrzeugs, ist es erfindungsgemäß vorgesehen, dass die Ständerwicklung als geordnete Wicklung ausgeführt wird und die Ständerwicklung in einem Wickelkopf in mindestens zwei axial beabstandeten Etagen ausgeführt wird. Unter dem Begriff "axial" ist dabei der Bezug auf die Drehachse der elektrischen Maschine zu verstehen, in die die Ständerwicklung eingesetzt wird. Bei einer derartig ausgeführten Ständerwicklung ergibt sich ein strukturierter, gut durchlüfteter Wickelkopf, der vorteilhafte mechanische Eigenschaften und stabile elektrische Eigenschaften aufweist. Der Wickelkopf mit der Ständerwicklung kann dabei sowohl in einem rund geformten Blechpaket ("open slot") als auch in einem Flachpaket verwendet werden. Unter einem Flachpaket soll verstanden werden, dass das Ständerpaket flach ausliegt, wenn die Wicklungen der Ständerwicklung eingebracht werden. Es wird danach zu einem runden Ständerpaket gebogen, wonach üblicherweise die Stoßstellen verschweißt werden. Da die Ständerwicklung geordnet aufgebaut wird, kann der im Wickelkopf gehaltene Teil in jeder Fertigungsstufe definiert in Form gebracht werden. Zudem hat sich in Versuchen gezeigt, dass der Einsatz einer derartigen Ständerwicklung bei hohen Drehzahlen lediglich ein geringes Strömungsgeräusch hervorruft. Es sei ausdrücklich darauf hingewiesen, dass die Ständerwicklung auch mit mehr als zwei Etagen aufgebaut werden kann. Handelt es sich um einen Wickelkopf mit einem im Wesentlichen symmetrischen Aufbau auf zwei Seiten, so ist zu beachten, dass im Sinne der Erfindung, die Etagen auf beiden Seiten nicht zusammengezählt werden, sondern auf mindestens einer der beiden Seiten, insbesondere auf beiden Seiten, aufzufinden sind. Erfindungsgemäß wird zunächst eine innere Wicklung und dann eine axial zur inneren Wicklung beabstandete äußere Wicklung um die innere Wicklung hergestellt. Es ergibt sich also eine Wicklung, die in axialer Richtung aufträgt. Sollte es erforderlich sein, kann der axiale Auftrag durch eine entsprechende Verkürzung der inneren Wickelköpfe ausgeglichen werden. Es ergibt sich bei diesem Vorgehen der Vorteil, dass die Wicklung kontinuierlich mit allen Phasen gleichzeitig gewickelt werden kann. Die Vorteile eines solchen Verfahrens manifestieren sich insbesondere darin, dass ein durchgehender Leiter verwendet werden kann und dass während des Herstellungsprozesses Kröpfungen und/oder Verprägungen eingebracht werden können. Die Ständerwicklung wird mittels eines rotierenden Wickelbalkens hergestellt. Dies erlaubt eine preiswertere Fertigung, da nicht mehr eine Vielzahl an Wickeleinrichtungen verwendet werden muss. Dabei ist es besonders vorteilhaft, wenn alle Phasen gleichzeitig gewickelt werden, da damit die Wickelzeiten verkürzt werden. Die Ständerwicklung wird mit einer inneren und einer äußeren Wicklung hergestellt, wobei die äußere Wicklung die innere Wicklung umschließt. Dadurch ergibt sich ein günstiger Aufbau, der bereits die Vorteile der Erfindung genießt. Dabei ist es nicht erforderlich, dass die äußere Wicklung die innere Wicklung vollständig umschließt. Vielmehr ist es ausreichend, wenn die äußere Wicklung die innere Wicklung teilweise umgibt. Die Ständerwicklung wird als Wellenwicklung ausgeführt und weist dabei mindestens einen Umkehrpunkt auf. Eine derartige Wicklung kann einfach hergestellt werden und erlaubt aufgrund der Weiterführung in den Umkehrpunkten eine geringere Anzahl an Leitern, die in einem weiteren Schritt noch verbunden werden müssen.

Bevorzugt wird mindestens eine Phase der Ständerwicklung aus einem einstückigen, durchgehenden Leiter gefertigt. Somit ergibt sich eine weitere Vereinfachung des Herstellungsverfahrens.

Ferner ist es bevorzugt, dass die innere und die äußere Wicklung in die gleiche Richtung ausgerichtet wird. Dies bedeutet, dass die Führung des jeweiligen Drahts in die gleiche Richtung geht, also gewissermaßen parallel erfolgt.

Mit Vorteil ist die Ständerwicklung aus einem Rechteckdraht ausgeführt, wobei der Ständerfüllfaktor insbesondere größer als 55 % ist. Der Ständerfüllfaktor ist bekanntermaßen das Verhältnis der Summe aller Leiterquerschnitte ohne Isolation (also insbesondere der Kupferquerschnitte) in einer Nut zur Gesamt-Querschnittsfläche der Nut. Mittels eines Rechteckdrahts kann ein besonders hoher Ständerfüllfaktor erreicht werden, wobei ein hoher Ständerfüllfaktor wiederum eine besonders gute Effizienz der Maschine ergibt. Zudem ergibt sich durch die Zähne des Ständers in Verbindung mit dem Draht/Leiter eine Klammerfunktion, sodass während des Einbringens der Drähte und während des späteren Betriebs ein Verrutschen ausgeschlossen ist.

Gemäß einer Weiterbildung der Erfindung wird der Leiter im Wickelkopf verprägt. Es ist möglich Verprägungen und/oder Kröpfungen des Leiters, insbesondere eines Kupferdrahts, anzubringen, da alle Leiter/Drähte während des Wickelvorgangs zugänglich sind.

Vorteilhafterweise wird die Ständerwicklung in ein Flachpaket oder in einen Ständer mit offenen Nuten eingelegt. Außerdem ist es vorteilhaft, wenn die Ständerwicklung mit Runddraht ausgeführt wird und die Drahtabschnitte, die innerhalb der Nuten des Ständerpakets zu liegen kommen, verprägt werden. Dies kann in einem Zwischenschritt oder in einem Abschlussschritt erfolgen. Auf diese Weise nehmen die Drähte die Form der Nut an.

Ferner ist es bevorzugt, dass die Breite der Drähte der Wicklung in etwa der Nutbreite entspricht. Damit liegen keine Drähte nebeneinander, und die Gefahr von Drahtkreuzungen oder eines Verrutschen von Drähten wird verringert oder eliminiert.

Dabei ist es vorteilhaft, wenn die Maschine mehr als drei Phasen aufweist. Es gilt ungefähr, dass das Verhältnis der Drahtbreite b zur Anzahl s der Phasen

$$b \text{ (s Phasen)} = b \text{ (3 Phasen)} \cdot (3 \text{ Phasen} / s \text{ Phasen})$$

beträgt. Dadurch können schmalere Drähte verwendet werden, die sich besser biegen lassen. Dies vereinfacht die Herstellung und das Formen des Wickelkopfs.

Schließlich ist es bevorzugt, wenn mindestens einmal auf der gleichen Seite des Wickelbalkens weitergewickelt wird und/oder mindestens einmal ein Kröpfen oder Verprägen der Drähte auf dem Wickelbalken erfolgt.

Andere vorteilhafte Ausgestaltungen des Verfahrens sind in weiteren Unteransprüchen enthalten.

Zeichnungen

Die Erfindung wird nun anhand von Ausführungsbeispielen näher erläutert. Es zeigen:

Figur 1     ein erstes Ausführungsbeispiel einer zweietagigen Ständerwicklung in einem Wickelkopf,

Figur 2     ein zweites Ausführungsbeispiel einer zweietagigen Ständerwicklung in einem Wickelkopf,

Figur 3     eine vereinfachte, systematische Darstellung eines Wickelbalkens,

Figur 4     das Aufbringen einer inneren Wicklung auf den Wickelbalken und

Figur 5     das Aufbringen einer äußeren Wicklung auf den Wickelbalken.

Beschreibung der Ausführungsbeispiele

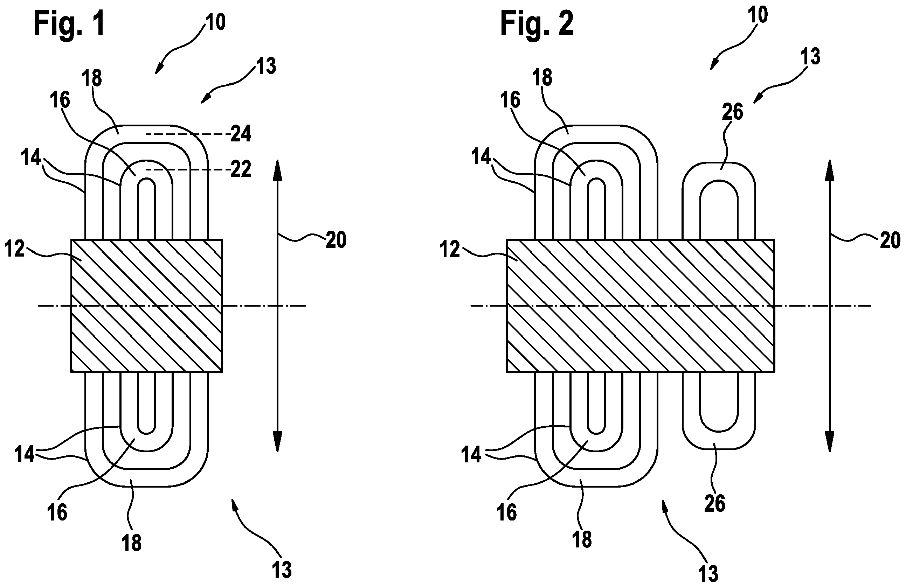

Figur 1 zeigt in einer Schnittansicht einen Teil einer Ständerwicklung 10 für eine elektrische Maschine, insbesondere für einen Generator eines Kraftfahrzeugs. Die Ständerwicklung 10 ist als geordnete Ständerwicklung 10 ausgeführt und in einem Ständerpaket 12 -in Schnittansicht dargestellt- gehalten. Die Ständerwicklung 10 weist einen Leiter/Draht 14 auf, aus dem auf zwei Seiten des Ständerpakets 12, also jeweils im Wickelkopf 13, jeweils eine innere Wicklung 16 und eine äußere Wicklung 18 gebildet sind. In der gewählten Darstellung ist zu erkennen, dass die äußere Wicklung 18 die innere Wicklung 16 jeweils umschließt. Betrachtet man nun die axiale Erstreckung (symbolisiert durch den Pfeil 20) des Ständerpakets 12 und der Ständerwicklung 10, so erkennt man, dass die innere Wicklung 16 sich bis zu einer ersten Etage 22 und die äußere Wicklung 18 bis zu einer zweiten Etage 24 erstreckt. Die Etagen 22, 24 sind dabei in axialer Richtung voneinander beabstandet. Innere und äußere Wicklung 16, 18 sind hier in die gleiche Richtung ausgerichtet.

Figur 2 zeigt, wiederum vereinfacht dargestellt, einen Teil einer Ständerwicklung 10, die in einem Ständerpaket 12 gehalten ist. Es gelten hier insofern die Ausführungen zur Figur 1. Figur 2 verdeutlicht, dass auch mehrere Wicklungen 16, 18, 26 aufeinander und/oder nebeneinander gewickelt werden können, insbesondere axial aufeinander und/oder radial nebeneinander. Ebenso wäre es möglich, hier jedoch nicht dargestellt, auch die Wicklungen 18, 26 mit zusätzlichen Wicklungen zu umgeben.

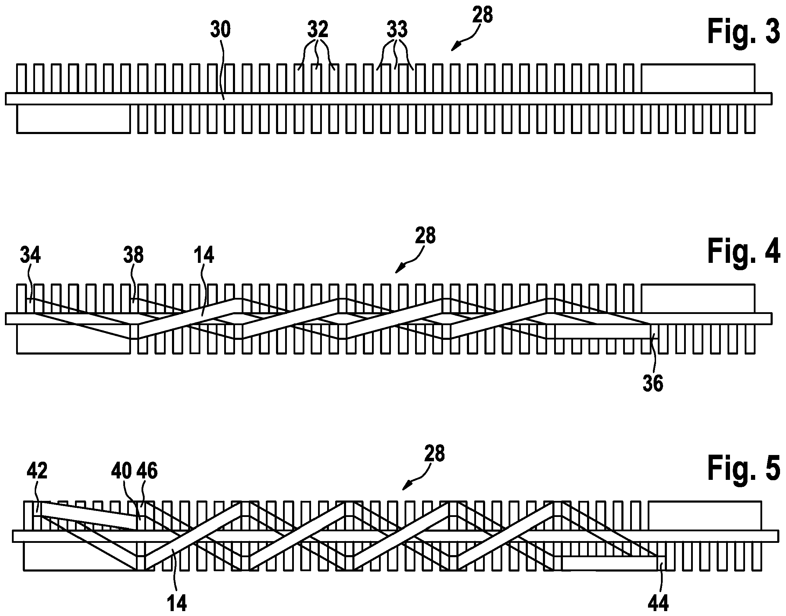

Anhand der Figuren 3, 4 und 5 wird nun aufgezeigt, wie sich die vorgeschlagene Ständerwicklung beispielsweise herstellen lässt. Dazu ist zunächst in der Figur 3 symbolisch ein Wickelbalken 28 mit einem Mittelsteg 30, einer großen Vielzahl an Sprossen 32 und den dazwischen liegenden Nuten 33 dargestellt.

In den Figuren 4 und 5 wird nun dargestellt, wie die innere Wicklung 16 (Figur 4) und die äußere Wicklung 18 (Figur 5) auf den Wickelbalken 28 aufgebracht werden. Die Vorderseite des Wickelbalkens 28 (hier die sichtbare Seite) zeigt die Anschlussseite (B-Seite) mit den Anschlussdrähten, während die Rückseite die Antriebsseite (A-Seite) darstellt. Um den Verlauf des einstückigen Leiters 14 besser darzustellen, wird der Leiter 14 in zwei verschiedenen Varianten gezeigt: Wenn der Leiter 14 in der grafischen Darstellung den Mittelsteg 30 und/öder die Sprossen 32 verdeckt, so bedeutet dies, dass der Leiter 14 auf der B-Seite verläuft. Ist der Leiter 14 lediglich mit zwei Linien dargestellt, sodass der Mittelsteg 30 und die Sprossen 32 weiterhin zu erkennen sind, so soll dies den Verlauf des Leiters 14 auf der A-Seite zeigen. Wie in Figur 4 deutlich zu erkennen ist, wird der Leiter 14 beginnend bei einem inneren Wicklungsanfangspunkt 34 wellenförmig abwechselnd über die A-Seite und die B-Seite zu einem inneren Umkehrpunkt 36 geführt. Hier wechselt der Leiter 14 von der B-Seite auf die A-Seite und wird dann erneut wellenförmig abwechselnd über die A-Seite und die B-Seite zu einem inneren Wicklungsendpunkt 38 der inneren Wicklung 16 geführt.

In der Figur 5 wird nun die Herstellung der äußeren Wicklung 18 gezeigt. Der Übersichtlichkeit halber wurde die bereits erstellte innere Wicklung 16 hier nicht erneut dargestellt, wenngleich innere und äußere Wicklung 16, 18 selbstverständlich auf einem Wickelbalken 28 ausgeführt werden. Wie bereits beschrieben, wird der Leiter 14 hier vorteilhafterweise einstückig ausgeführt, sodass der innere Wicklungsendpunkt 38 mit dem äußeren Wicklungsanfangspunkt 40 zusammenfällt. Der Leiter 14 wird von dort zu einem Umkehrpunkt 42 geführt. Von hier aus wird der Leiter 14 wellenförmig abwechselnd über die A-Seite und die B-Seite zu einem äußeren Umkehrpunkt 44 geführt. Hier wechselt der Leiter 14 von der B-Seite auf die A-Seite und wird von dort wiederum wellenförmig abwechselnd über die A-Seite und die B-Seite zum äußeren Wicklungsendpunkt 46 geführt. Damit ist das Prinzip der Herstellung einer mehretagigen Ständerwicklung 10 erläutert.

Nachfolgend wird der Herstellungsprozess für eine Ständerwicklung 10 mit allgemein s Phasen detaillierter beschrieben. Es wird dabei vorausgesetzt, dass zu Beginn s Wicklungsanfänge in die ersten s Nuten eingelegt werden. Die Herstellung der ersten Hälfte der inneren Wicklung gestaltet sich dann wie folgt:

1. Drehen des Wickelbalkens um 180° und gleichzeitiges Verschieben der Drahtzuführung um s Nuten nach rechts.
2. Einlegen der Drähte in die Nuten s+1 bis 2s.
3. Drehen des Wickelbalkens um 180° und gleichzeitiges Verschieben der Drahtzuführung um s Nuten nach rechts.
4. Einlegen der Drähte in die Nuten s+1 bis 2s.
5. Wiederholung dieser Schritte, bis das Ende des Wickelbalkens erreicht ist.
6. Am Ende des Wickelbalkens angelangt, entfällt die Drehung des Wickelbalkens. Dann Vorschub um s Nuten und Einlegen der letzten s Drähte erneut auf der gleichen Seite des Wickelbalkens.
7. Falls nötig, kann nun die Formung des Wickelkopfes mittels Werkzeugen erfolgen.

Die Herstellung der zweiten Hälfte der inneren Wicklung geschieht analog zur Herstellung der ersten Hälfte, wobei jetzt aber auf das andere Ende des Wickelbalkens hingearbeitet wird. Nachdem die innere Wicklung fertig gestellt ist, wird die äußere Wicklung nach dem gleichen Prinzip erstellt. Wenn die Wicklung insgesamt fertig gestellt ist, wird die Wicklung vom Wickelbalken genommen und verprägt, damit sie im späteren Einbauzustand in axialer und/oder radialer Richtung nicht aufträgt.

**Patentansprüche**

1. Verfahren zur Herstellung einer Ständerwicklung (10) einer elektrischen Maschine für ein Kraftfahrzeug, welche als geordnete Ständerwicklung (10) mit s Phasen ausgeführt wird und in einem Wickelkopf (13) in mindestens zwei axial beabstandeten Etagen (22, 24) ausgeführt wird, wobei zunächst eine innere Wicklung (16) und dann eine axial zur inneren Wicklung (16) beabstandete äußere Wicklung (18) um die innere Wicklung (16) hergestellt wird und wobei die Ständerwicklung (10) als Wellenwicklung mittels eines rotierenden Wickelbalkens (28) hergestellt wird, wobei nacheinander jeweils Hälften der inneren bzw. äußeren Wicklung mit folgenden Verfahrensschritten hergestellt werden:

   a) Drehen des Wickelbalkens um 180° und gleichzeitiges Verschieben der Drahtzuführung um s Nuten nach rechts;
   b) Einlegen der Drähte in die Nuten;

c) Drehen des Wickelbalkens um 180° und gleichzeitiges Verschieben der Drahtzuführung um s Nuten nach rechts;

d) dann Einlegen der Drähte in die Nuten;

e) Wiederholung dieser Schritte, bis das Ende des Wickelbalkens erreicht ist;

f) am Ende des Wickelbalkens angelangt, entfällt die Drehung des Wickelbalkens,

g) dann Vorschub um s Nuten und Einlegen der letzten s Drähte erneut auf der gleichen Seite des Wickelbalkens (28);

h) wiederholtes Ausführen der Verfahrensschritte a) bis f) für jeweils die nächste Hälfte der inneren bzw. äußeren Wicklung, wobei auf das andere Ende des Wickelbalkens (28) hingearbeitet wird.

2. Verfahren zur Herstellung einer Ständerwicklung (10) nach Anspruch 1, **dadurch gekennzeichnet, dass** die Ständerwicklung (10) mit einer inneren und eine äußeren Wicklung (16, 18) gewickelt wird, wobei die äußere Wicklung (18) die innere Wicklung (16) umschließt.

3. Verfahren zur Herstellung einer Ständerwicklung (10) nach einem der vorhergehenden Ansprüche, **dadurch gekennzeichnet, dass** die Ständerwicklung (10) als Wellenwicklung mit mindestens einem Umkehrpunkt (36, 42, 44) ausgeführt wird.

4. Verfahren zur Herstellung einer Ständerwicklung (10) nach einem der vorhergehenden Ansprüche, **dadurch gekennzeichnet, dass** mindestens eine Phase der Ständerwicklung (10) aus einem einstückigen, durchgehenden Leiter (14) gefertigt wird.

5. Verfahren zur Herstellung einer Ständerwicklung (10) nach einem der vorhergehenden Ansprüche, **dadurch gekennzeichnet, dass** die innere und die äußere Wicklung (16, 18) in die gleiche Richtung ausgerichtet werden.

6. Verfahren zur Herstellung einer Ständerwicklung (10) nach einem der vorhergehenden Ansprüche, **dadurch gekennzeichnet, dass** ein Abstand der Etagen (22, 24) in etwa zwischen 1mm und 5mm beträgt.

7. Verfahren zur Herstellung einer Ständerwicklung (10) nach einem der vorhergehenden Ansprüche, **dadurch gekennzeichnet, dass** die Ständerwicklung (10) aus einem Rechteckdraht ausgeführt wird, wobei ein Ständerfüllfaktor insbesondere größer als 55% ist.

8. Verfahren zur Herstellung einer Ständerwicklung (10) nach einem der vorhergehenden Ansprüche, **dadurch gekennzeichnet, dass** in einer Nut eine gerade Anzahl der Leiter (14) angeordnet wird, insbesondere vier oder ein Vielfaches von vier.

9. Verfahren zur Herstellung einer Ständerwicklung (10) nach einem der vorhergehenden Ansprüche, **dadurch gekennzeichnet, dass** der Leiter (14) im Wickelkopf (13) verprägt wird.

10. Verfahren zur Herstellung einer Ständerwicklung (10) nach einem der vorhergehenden Ansprüche, **dadurch gekennzeichnet, dass** die Ständerwicklung (10) in ein Flachpaket und/oder in einen Ständer mit offenen Nuten eingelegt wird.

11. Verfahren zur Herstellung einer Ständerwicklung (10) nach einem der vorhergehenden Ansprüche, **dadurch gekennzeichnet, dass** die Ständerwicklung (10) mit Runddraht ausgeführt wird und die Drahtabschnitte, die innerhalb der Nuten des Ständerpakets (12) zu liegen kommen, verprägt werden.

12. Verfahren zur Herstellung einer Ständerwicklung (10) nach einem der vorhergehenden Ansprüche, **dadurch gekennzeichnet, dass** die Breite der Drähte der Wicklung in etwa der Nutbreite entspricht.

13. Verfahren nach einem der vorhergehenden Ansprüche, **dadurch gekennzeichnet, dass** mindestens einmal auf der gleichen Seite des Wickelbalkens (28) weitergewickelt wird und/oder mindestens einmal ein Kröpfen oder Verprägen der Drähte auf dem Wickelbalken (28) erfolgt.

14. Verfahren nach einem der vorhergehenden Ansprüche, **dadurch gekennzeichnet, dass** ein kontinuierlicher Draht verwendet wird.

15. Verfahren nach einem der vorhergehenden Ansprüche, **dadurch gekennzeichnet, dass** alle Drahtabschnitte einer Nut, insbesondere als Runddraht ausgeführt, gleichzeitig verprägt werden.

16. Verfahren nach einem der vorhergehenden Ansprüche, **dadurch gekennzeichnet, dass** eine Querschnittsform des Drahts zunächst im Wesentlichen rund ist und in einem nachfolgenden Schritt geändert wird.

17. Verfahren nach Anspruch 16, **dadurch gekennzeichnet, dass** die Änderung der Querschnittsform im Nutbereich stattfindet zur Anpassung der Drahtform an die Nutform und zur Erzielung eines hohen Ständerfüllfaktors.

**Claims**

1. Method for producing a stator winding (10) of an electrical machine for a motor vehicle, which stator winding is embodied as an ordered stator winding (10) with s phases and is embodied in an end winding (13) in at least two axially spaced-apart levels (22, 24), wherein initially an inner winding (16) and then an outer winding (18), which is axially spaced apart from the inner winding (16), around the inner winding (16) are produced, and wherein the stator winding (10) is produced as a wave winding by means of a rotating winding bar (28),
wherein halves of the inner and outer winding are respectively produced one after the other using the following method steps:

   a) rotating the winding bar through 180° and at the same time shifting the wire feed by s slots to the right;
   b) inserting the wires into the slots;
   c) rotating the winding bar through 180° and at the same time shifting the wire feed by s slots to the right;
   d) then inserting the wires into the slots;
   e) repeating these steps until the end of the winding bar is reached;
   f) rotation of the winding bar is stopped when the end of the winding bar is reached;
   g) then advancing by s slots and inserting the last s wires once again on the same side of the winding bar (28) ;
   h) repeatedly executing method steps a) to f) for the next half of the inner and outer winding in each case, wherein the other end of the winding bar (28) is worked towards.

2. Method for producing a stator winding (10) according to Claim 1, **characterized in that** the stator winding (10) is wound with an inner and an outer winding (16, 18), wherein the outer winding (18) surrounds the inner winding (16).

3. Method for producing a stator winding (10) according to either of the preceding claims, **characterized in that** the stator winding (10) is embodied as a wave winding with at least one reversal point (36, 42, 44).

4. Method for producing a stator winding (10) according to one of the preceding claims, **characterized in that** at least one phase of the stator winding (10) is manufactured from a one-piece, continuous conductor (14).

5. Method for producing a stator winding (10) according to one of the preceding claims, **characterized in that** the inner and the outer winding (16, 18) are oriented in the same direction.

6. Method for producing a stator winding (10) according to one of the preceding claims, **characterized in that** a distance between the levels (22, 24) is approximately between 1 mm and 5 mm.

7. Method for producing a stator winding (10) according to one of the preceding claims, **characterized in that** the stator winding (10) is embodied from a rectangular wire, wherein a stator filling factor is, in particular, greater than 55%.

8. Method for producing a stator winding (10) according to one of the preceding claims, **characterized in that** an even number of the conductors (14), in particular four or a multiple of four, is arranged in a slot.

9. Method for producing a stator winding (10) according to one of the preceding claims, **characterized in that** the conductor (14) is stamped in the end winding (13).

10. Method for producing a stator winding (10) according to one of the preceding claims, **characterized in that** the stator winding (10) is inserted into a flat core and/or into a stator with open slots.

11. Method for producing a stator winding (10) according to one of the preceding claims, **characterized in that** the stator winding (10) is embodied with a round wire and the wire sections which come to rest within the slots of the stator core (12) are stamped.

12. Method for producing a stator winding (10) according to one of the preceding claims, **characterized in that** the width of the wires of the winding corresponds approximately to the slot width.

13. Method according to one of the preceding claims, **characterized in that** further winding is performed at least once on the same side of the winding bar (28) and/or the wires are bent or stamped at least once on the winding bar (28).

14. Method according to one of the preceding claims, **characterized in that** a continuous wire is used.

15. Method according to one of the preceding claims, **characterized in that** all of the wire sections of a slot, in particular embodied as a round wire, are stamped at the same time.

16. Method according to one of the preceding claims, **characterized in that** a cross-sectional shape of the wire is initially substantially round and is changed in a following step.

17. Method according to Claim 16, **characterized in that** the change in the cross-sectional shape in the slot region takes place in order to match the wire shape to the slot shape and to achieve a high stator filling factor.

**Revendications**

1. Procédé de réalisation d'un enroulement de stator (10) d'un moteur électrique pour un véhicule automobile, réalisé sous la forme d'un enroulement de stator (10) ordonné à s phases et réalisé dans une tête de bobine (13) sur au moins deux étages (22, 24) axialement séparés, dans lequel un enroulement interne (16) est tout d'abord réalisé et un enroulement externe (18) est ensuite réalisé de manière axialement séparée de l'enroulement interne (16) autour de l'enroulement interne (16) et dans lequel l'enroulement de stator (10) est réalisé sous la forme d'un enroulement ondulé au moyen d'une barre d'enroulement tournante (18), dans lequel des moitiés respectives de l'enroulement interne ou externe sont réalisées consécutivement par les étapes de procédé suivantes :

   a) mettre en rotation la barre d'enroulement de 180° et décaler simultanément le guide d'amenée de fil de s encoches vers la droite ;
   b) insérer les fils dans les encoches ;
   c) faire tourner la barre d'enroulement de 180° et décaler simultanément le guide d'amenée de fil de s encoches vers la droite ;
   d) insérer ensuite les fils dans les encoches ;
   e) répéter lesdites étapes jusqu'à ce que l'extrémité de la barre d'enroulement soit atteinte ;
   f) interrompre la rotation de la barre d'enroulement à l'extrémité de la barre d'enroulement,
   g) effectuer ensuite une avance de s encoches et introduire de nouveau les s derniers fils du même côté de la barre d'enroulement (28) ;
   h) réaliser de nouveau les étapes de procédé a) à f) respectivement pour la moitié suivante de l'enroulement interne ou externe, dans lequel un travail est effectué sur l'autre extrémité de la barre d'enroulement (28).

2. Procédé de réalisation d'un enroulement de stator (10) selon la revendication 1, **caractérisé en ce que** l'enroulement de stator (10) est enroulé avec un enroulement interne et un enroulement externe (16, 18), dans lequel l'enroulement externe (18) entoure l'enroulement interne (16).

3. Procédé de réalisation d'un enroulement de stator (10) selon l'une quelconque des revendications précédentes, **caractérisé en ce que** l'enroulement de stator (10) est réalisé sous la forme d'un enroulement ondulé ayant au moins un point d'inversion (36, 42, 44).

4. Procédé de réalisation d'un enroulement de stator (10) selon l'une quelconque des revendications précédentes, **caractérisé en ce qu'**au moins une phase de l'enroulement de stator (10) est constituée d'un conducteur (14) traversant d'un seul tenant.

5. Procédé de réalisation d'un enroulement de stator (10) selon l'une quelconque des revendications précédentes, **caractérisé en ce que** les enroulements de stator interne et externe (16, 18) sont orientés dans la même direction.

**6.** Procédé de réalisation d'un enroulement de stator (10) selon l'une quelconque des revendications précédentes, **caractérisé en ce qu'**une distance entre les étages (22, 24) est comprise entre environ 1 mm et 5 mm.

**7.** Procédé de réalisation d'un enroulement de stator (10) selon l'une quelconque des revendications précédentes, **caractérisé en ce que** l'enroulement de stator (10) est réalisé à partir d'un fil rectangulaire, dans lequel le facteur de remplissage du stator est notamment supérieur à 55 %.

**8.** Procédé de réalisation d'un enroulement de stator (10) selon l'une quelconque des revendications précédentes, **caractérisé en ce qu'**un nombre pair de conducteurs (14) est disposé dans une encoche, notamment quatre ou un multiple de quatre.

**9.** Procédé de réalisation d'un enroulement de stator (10) selon l'une quelconque des revendications précédentes, **caractérisé en ce que** le conducteur (14) est estampé dans la tête de bobine (13).

**10.** Procédé de réalisation d'un enroulement de stator (10) selon l'une quelconque des revendications précédentes, **caractérisé en ce que** l'enroulement de stator (10) est inséré dans un paquet plat et/ou dans un stator ayant des encoches ouvertes.

**11.** Procédé de réalisation d'un enroulement de stator (10) selon l'une quelconque des revendications précédentes, **caractérisé en ce que** l'enroulement de stator (10) est réalisé à partir d'un fil rond et **en ce que** les parties de fil qui se positionnent à l'intérieur des encoches du paquet de stator (12) sont estampées.

**12.** Procédé de réalisation d'un enroulement de stator (10) selon l'une quelconque des revendications précédentes, **caractérisé en ce que** la largeur des fils de l'enroulement correspond approximativement à la largeur des encoches.

**13.** Procédé selon l'une quelconque des revendications précédentes, **caractérisé en ce qu'**un enroulement supplémentaire est effectué au moins une fois du même côté de la barre d'enroulement (28) et/ou **en ce qu'**un coudage ou un estampage des fils est effectué sur la barre d'enroulement (28).

**14.** Procédé selon l'une quelconque des revendications précédentes, **caractérisé en ce qu'**un fil continu est utilisé.

**15.** Procédé selon l'une quelconque des revendications précédentes, **caractérisé en ce que** toutes les parties de fil d'une encoche, réalisées notamment sous la forme d'un fil rond, sont estampées simultanément.

**16.** Procédé selon l'une quelconque des revendications précédentes, **caractérisé en ce qu'**une forme de section transversale du fil est tout d'abord sensiblement ronde puis est modifiée lors d'une étape suivante.

**17.** Procédé selon la revendication 16, **caractérisé en ce que** la modification de la forme de la section transversale se produit dans la zone de l'encoche pour adapter la forme du fil à la forme de l'encoche et pour obtenir un facteur de remplissage élevé du stator.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10208566 A1